(19) Europäisches Patentamt
European Patent Office
Office européen des brevets

(11) **EP 4 693 452 A1**

(12) **EUROPEAN PATENT APPLICATION**
published in accordance with Art. 153(4) EPC

(43) Date of publication:
**11.02.2026 Bulletin 2026/07**

(21) Application number: **24780486.7**

(22) Date of filing: **27.03.2024**

(51) International Patent Classification (IPC):
**H01M 4/139** (2010.01)    **H01M 4/62** (2006.01)

(52) Cooperative Patent Classification (CPC):
**H01M 4/139; H01M 4/62;** Y02E 60/10

(86) International application number:
**PCT/JP2024/012309**

(87) International publication number:
**WO 2024/204384 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023051784**

(71) Applicant: **FUJIFILM Corporation**
**Tokyo 106-8620 (JP)**

(72) Inventors:
• **MIZOGUCHI, Takao**
**Minamiashigara-shi, Kanagawa 250-0193 (JP)**
• **ISOJIMA, Hiroshi**
**Minamiashigara-shi, Kanagawa 250-0193 (JP)**
• **OZAWA, Shin**
**Minamiashigara-shi, Kanagawa 250-0193 (JP)**
• **YAWATA, Toshihiko**
**Minamiashigara-shi, Kanagawa 250-0193 (JP)**

(74) Representative: **HGF**
**HGF Limited**
**4th Floor, 1 City Square**
**Leeds LS1 2AL (GB)**

(54) **SLURRY FOR FORMING POSITIVE ELECTRODE OF NONAQUEOUS ELECTROLYTE SECONDARY BATTERY, NONAQUEOUS ELECTROLYTE SECONDARY BATTERY, AND METHOD FOR PRODUCING NONAQUEOUS ELECTROLYTE SECONDARY BATTERY**

(57)    Provided are a slurry for forming a positive electrode of a non-aqueous electrolytic solution secondary battery, the slurry containing a positive electrode active material, a conductive auxiliary agent, and an electrolyte, in which a specific surface area $x$ ($m^2/g$) of the conductive auxiliary agent and a content $y$ (% by mass) of the conductive auxiliary agent in a solid content of the slurry for forming a positive electrode satisfy $5 \leq x \times y \leq 420$ and $100 \leq x$, and an electron conductivity $z$ (mS/cm) of the positive electrode active material is 1.0 or more; a non-aqueous electrolytic solution secondary battery using the slurry; and a manufacturing method thereof.

**FIG. 1**

EP 4 693 452 A1

**Description**

**BACKGROUND OF THE INVENTION**

1. Field of the Invention

The present invention relates to a slurry for forming a positive electrode of a non-aqueous electrolytic solution secondary battery, a non-aqueous electrolytic solution secondary battery, and a method for manufacturing a non-aqueous electrolytic solution secondary battery.

2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been enlarged and been used in transportation equipment such as automobiles, and the use of the battery as a storage device for nighttime power, power generation by natural energy, and the like has also been promoted.

A technique for increasing a capacity of the non-aqueous electrolytic solution secondary battery has been studied. For example, JP2017-147222A discloses a technique for causing an electrode active material layer to function as a secondary battery in a state of a slurry containing a high content of an active material. Specifically, JP2017-147222A discloses an electrochemical cell including a positive electrode consisting of a non-bonded body which contains a first active material and an electrolytic solution in a first non-aqueous liquid electrolyte; a negative electrode consisting of a non-bonded body which contains a second active material and an electrolytic solution in a second non-aqueous liquid electrolyte; and an ion permeable membrane disposed between the positive electrode and the negative electrode, in which the positive electrode and the negative electrode each have a thickness of approximately 200 $\mu$m to approximately 3,000 $\mu$m.

According to the technique disclosed in JP2017-147222A, since an electrode active material layer (a positive electrode active material layer and a negative electrode active material layer) contains an electrolyte and is in a slurry-like and non-bonded state, as in the positive electrode and the negative electrode, the electrode active material layer can be formed into a thick film while maintaining flexibility of the electrode active material layer, a binder which bonds solid particles is not required, and the charge capacity and the entire energy density can be significantly increased while maintaining the flexibility of the battery. The non-aqueous electrolytic solution secondary battery in which the electrode active material layer is formed in a slurry state containing an electrolytic solution (electrolyte), as disclosed in JP2017-147222A, may be referred to as a semi-solid state secondary battery in the following description.

Among electrode active materials, a carbon-based material or the like is widely used as a negative electrode active material, and electron conductivity thereof is relatively high. On the other hand, electron conductivity of a positive electrode active material is generally inferior to that of the carbon-based material. Therefore, it is considered that improvement of the electron conductivity of the positive electrode active material in the non-aqueous electrolytic solution secondary battery is an important technical element in improvement of output characteristics of the battery.

**SUMMARY OF THE INVENTION**

In order to increase a capacity (energy density) of the semi-solid state secondary battery, there is an attempt to increase a content of the positive electrode active material which stores ions in a slurry-like positive electrode active material layer. In addition, in order to further increase the content of the positive electrode active material in the positive electrode active material layer, there is an attempt to suppress a content of a conductive auxiliary agent. However, in a case where the content of the conductive auxiliary agent in the positive electrode active material layer is suppressed, conductivity of the positive electrode active material layer is reduced, which is disadvantageous in the output characteristics. There is an attempt to maintain high output characteristics by using a small amount of a conductive auxiliary agent having a large specific surface area and easily constructing an electron conduction network. However, as a result of studies, the present inventors have found that the conductive auxiliary agent having a large specific surface area has high liquid absorption properties, which may be a constraint on the improvement of battery performance. That is, it has been found that, even in a case where a small amount is used, slurry properties are in a state close to those of a powder, this tendency is more pronounced in a slurry in which the content of the positive electrode active material is high, and as a result, the positive electrode active material layer formed of such a slurry is likely to impair adhesiveness to a positive electrode collector, and thus the battery to be obtained tends to be inferior in cycle characteristics.

An object of the present invention is to provide a slurry for forming a positive electrode, which is a slurry for forming a positive electrode of a non-aqueous electrolytic solution secondary battery (semi-solid state secondary battery), containing a positive electrode active material, a conductive auxiliary agent, and an electrolyte, in which a non-aqueous electrolytic solution secondary battery having excellent adhesiveness to a positive electrode collector and excellent cycle characteristics can be obtained even in a case where a conductive auxiliary agent having a large specific surface area is used. Another object of the present invention is to provide a non-aqueous electrolytic solution secondary battery using the slurry for forming a positive electrode, and a manufacturing method thereof.

The above-described objects of the present invention have been achieved by the following means.

[1] A slurry for forming a positive electrode of a non-aqueous electrolytic solution secondary battery, the slurry comprising:

a positive electrode active material;
a conductive auxiliary agent; and
an electrolyte,
in which a specific surface area x ($m^2$/g) of the conductive auxiliary agent and a content y (% by mass) of the conductive auxiliary agent in a solid content of the slurry for forming a positive electrode satisfy $5 \leq x \times y \leq 420$ and $100 \leq x$, and
an electron conductivity z (mS/cm) of the positive electrode active material is 1.0 or more.

[2] The slurry for forming a positive electrode according to [1],
in which the x, the y, and the z satisfy $z \leq (-0.0175 \times x \times y) + 10$.
[3] The slurry for forming a positive electrode according to [1] or [2],
in which an electrical resistance of a surface of the positive electrode active material is $1.0 \times 10^8$ Ω or less.
[4] The slurry for forming a positive electrode according to any one of [1] to [3],
in which a carbon amount on a surface of a positive electrode active material layer formed of the slurry for forming a positive electrode is 5.0% by mass or less.
[5] The slurry for forming a positive electrode according to any one of [1] to [4],
in which, in Raman spectroscopic analysis of the surface of the positive electrode active material, a ratio (G/D) of a peak intensity of a G band to a peak intensity of a D band is 0.5 to 4.0.
[6] A non-aqueous electrolytic solution secondary battery comprising, in the following order:

a positive electrode;
a separator; and
a negative electrode,
in which the slurry for forming a positive electrode according to any one of [1] to [5] is used as a positive electrode active material layer of the positive electrode.

[7] A method for manufacturing a non-aqueous electrolytic solution secondary battery, comprising:
applying the slurry for forming a positive electrode according to any one of [1] to [5] onto a positive electrode collector to form a slurry-like positive electrode active material layer.

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

With the slurry for forming a positive electrode of a non-aqueous electrolytic solution secondary battery according to the aspect of the present invention, it is possible to obtain a non-aqueous electrolytic solution secondary battery (semi-solid state secondary battery) having excellent adhesiveness to a positive electrode collector in a state of a slurry and having excellent cycle characteristics, even in a case where a conductive auxiliary agent having a large specific surface area is used. The non-aqueous electrolytic solution secondary battery according to the aspect of the present invention has excellent adhesiveness between a positive electrode active material layer and a positive electrode collector and having excellent cycle characteristics, even in a case where a conductive auxiliary agent having a large specific surface area is used in a slurry-like positive electrode active material layer. With the method of manufacturing a non-aqueous electrolytic solution secondary battery according to the aspect of the present invention, the above-described non-aqueous electrolytic solution secondary battery (semi-solid state secondary battery) can be obtained.

## BRIEF DESCRIPTION OF THE DRAWINGS

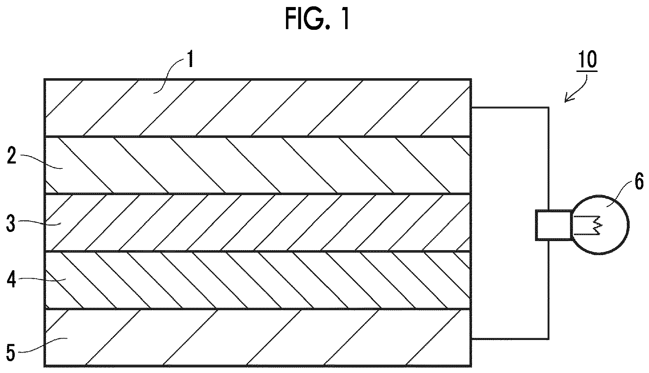

FIG. 1 is a longitudinal cross-sectional view schematically showing a basic lamination configuration of an embodiment of the secondary battery according to the present invention.

## DESCRIPTION OF THE PREFERRED EMBODIMENTS

Preferred embodiments of the present invention will be described, but the present invention is not limited to these embodiments except as specified in the present invention.

[Slurry for forming positive electrode]

The slurry for forming a positive electrode according to the embodiment of the present invention (also referred to as "positive electrode slurry according to the embodiment of the present invention") is a slurry (suspension or dispersion liquid) containing a positive electrode active material, a conductive auxiliary agent, and an electrolyte, and is a slurry suitable for forming a positive electrode active material layer of a non-aqueous electrolytic solution secondary battery. In the positive electrode slurry according to the embodiment of the present invention, a specific surface area x ($m^2$/g) of the conductive auxiliary agent and a content y (% by mass) of the conductive auxiliary agent in a solid content of the positive electrode slurry satisfy $5 \leq x \times y \leq 420$ and $100 \leq x$, and an electron conductivity z (mS/cm) of the positive electrode active material is 1.0 or more. In the present invention, the "solid content" of the positive electrode slurry means the positive electrode active material and the conductive auxiliary agent, and does not include the electrolyte.

As described above, in a case of using the positive electrode active material in which the electron conductivity is increased to a specific level, using the conductive auxiliary agent having a specific surface area of 100 $m^2$/g or more, and controlling the relationship between the specific surface area and the content of the conductive auxiliary agent, it is possible to improve the adhesiveness of the obtained slurry-like positive electrode active material layer to the collector while using the conductive auxiliary agent having a high specific surface area, and the electron conductivity in a case of being used as an electrode is also excellent. As a result, the non-aqueous electrolytic solution secondary battery having the slurry-like positive electrode active material layer has excellent cycle characteristics.

The positive electrode slurry according to the embodiment of the present invention contains an electrolyte (that is, contains an electrolytic solution obtained by adding the electrolyte to a dispersion medium).

The specific surface area x ($m^2$/g) of the conductive auxiliary agent and the content y (% by mass) of the conductive auxiliary agent in the solid content of the positive electrode slurry satisfy $5 \leq x \times y \leq 420$, preferably $7 \leq x \times y \leq 401$, more preferably $9 \leq x \times y \leq 300$, and still more preferably $9 \leq x \times y \leq 280$.

As the value of $x \times y$ (value obtained by multiplying x by y) is smaller, the adhesiveness, the electron conductivity, and the cycle characteristics tend to be excellent.

The "specific surface area x" can be measured by a BET method as follows.

-BET specific surface area measuring method-

0.2 g of the conductive auxiliary agent is dried at 120°C for 6 hours, and then measured under the following measurement conditions using BELSORP mini (trade name) manufactured by MicrotracBEL Corp.

· Adsorption temperature: 77 K
· Adsorbed gas: $N_2$
· Equilibrium time: 100 seconds
· Purge gas: He

In addition, the "content y of the conductive auxiliary agent in the solid content of the positive electrode slurry" is, for example, in a case where the solid content of the positive electrode slurry consists of the positive electrode active material and the conductive auxiliary agent, a proportion of the conductive auxiliary agent in the total content of the positive electrode active material and the conductive auxiliary agent.

The specific surface area x ($m^2$/g) of the conductive auxiliary agent is not particularly limited as long as the above-

EP 4 693 452 A1

described relationship of x and y is satisfied, but is preferably 150 m$^2$/g or more, and more preferably 180 m$^2$/g or more. The upper limit thereof is not particularly limited, and for example, it is practical to set the specific surface area x to 1,500 m$^2$/g or less. The specific surface area x of the conductive auxiliary agent is preferably in a range of 100 to 1,500 m$^2$/g, more preferably in a range of 100 to 1,200 m$^2$/g, still more preferably in a range of 150 to 1,000 m$^2$/g, and even more preferably in a range of 150 to 900 m$^2$/g.

The content y (% by mass) of the conductive auxiliary agent in the solid content of the positive electrode slurry is not particularly limited as long as the above-described relationship of x and y is satisfied, but is preferably 0.03% to 4.00% by mass, more preferably 0.03% to 2.00% by mass, still more preferably 0.05% to 1.00% by mass, even more preferably 0.05% to 0.80% by mass, even still more preferably 0.05% to 0.50% by mass, further more preferably 0.05% to 0.45% by mass, even further more preferably 0.05% to 0.30% by mass, even further still more preferably 0.05% to 0.20% by mass, and particularly preferably 0.05% to 0.10% by mass.

The electron conductivity z (mS/cm) of the positive electrode active material is 1.0 or more, preferably 1.2 or more. The upper limit thereof is not particularly limited, but is practically 8.0 or less. The range of the electron conductivity z is preferably 1.0 to 8.0, more preferably 1.0 to 7.0, still more preferably 1.2 to 6.0, even more preferably 1.2 to 5.0, even still more preferably 1.2 to 4.0, further more preferably 1.2 to 3.0, and particularly preferably 1.2 to 2.5. In a case where the electron conductivity z of the positive electrode active material is within the above-described range, by using the positive electrode active material in combination with the conductive auxiliary agent having a specific surface area of 100 m$^2$/g or more and satisfying the relationship between the specific surface area and the content of the conductive auxiliary agent, it is possible to improve the adhesiveness and the battery performance of the obtained battery while sufficiently increasing the electron conductivity in the obtained positive electrode active material layer.

The electron conductivity of the positive electrode active material can be controlled by selection of a constituent material of the positive electrode active material, application of a surface coating layer to the positive electrode active material, and the like.

The electron conductivity of the positive electrode active material can be measured by a method described in Examples.

It is preferable that the specific surface area x of the conductive auxiliary agent, the content y of the conductive auxiliary agent, and the electron conductivity z of the positive electrode active material further satisfy $z \leq (-0.0175 \times x \times y) + 10$. In a case where the relationship is satisfied, the adhesion strength, the electron conductivity of the positive electrode active material layer, and the cycle characteristics tend to be further improved.

An electrical resistance on a surface of the positive electrode active material (particles) is not particularly limited. For example, the electrical resistance may be $2.0 \times 10^8$ $\Omega$ or less, more preferably $1.2 \times 10^8$ $\Omega$ or less, and still more preferably $1.0 \times 10^8$ $\Omega$ or less. The electrical resistance is preferably $3.0 \times 10^7$ to $2.0 \times 10^8$ $\Omega$, more preferably $3.0 \times 10^7$ to $1.2 \times 10^8$ $\Omega$, still more preferably $3.0 \times 10^7$ to $6.0 \times 10^7$ $\Omega$, even more preferably $3.0 \times 10^7$ to $5.0 \times 10^7$ $\Omega$, and even still more preferably $3.5 \times 10^7$ to $5.0 \times 10^7$ $\Omega$. As the electrical resistance is smaller, the electron conductivity is higher. In the present invention, it is preferable to use a positive electrode active material in which the electron conductivity is increased in a specific range.

The electrical resistance of the surface of the positive electrode active material can be controlled by the selection of the constituent material of the positive electrode active material, a surface coating treatment, and the like.

The electrical resistance of the surface of the positive electrode active material can be measured by a method described in Examples.

A carbon amount on a surface of a positive electrode active material layer formed of the positive electrode slurry according to the embodiment of the present invention is not particularly limited, and is preferably 6.5% by mass or less, more preferably 5.6% by mass or less, still more preferably 5.3% by mass or less, even more preferably 5.0% by mass or less, even still more preferably 4.5% by mass or less, further more preferably 4.2% by mass or less, even further more preferably 3.5% by mass or less, and even further still more preferably 3.3% by mass or less.

Here, the carbon amount on the surface of the positive electrode active material layer corresponds to a carbon amount derived from carbon-containing components (for example, the surface coating of the positive electrode active material, the conductive auxiliary agent, and the like) contained in the positive electrode active material layer. In a case where the carbon amount is 4.5% by mass or less, the adhesiveness to the collector, the electron conductivity, and the output characteristics tend to be further improved.

The carbon amount on the surface of the positive electrode active material layer is preferably 2.5% to 6.5% by mass, more preferably 2.5% to 5.6% by mass, still more preferably 2.5% to 5.3% by mass, even more preferably 2.5% to 5.0% by mass, even still more preferably 2.5% to 4.5% by mass, further more preferably 2.5% to 4.2% by mass, further still more preferably 2.5% to 4.0% by mass, even further more preferably 2.5% to 3.5% by mass, even further still more preferably 2.5% to 3.4% by mass, and even further still more preferably 2.5% to 3.3% by mass.

The carbon amount on the surface of the positive electrode active material layer can be measured by a method described in Examples using energy dispersive X-ray spectroscopy (SEM-EDX).

It is preferable that, in Raman spectroscopic analysis of the surface of the positive electrode active material (particles), a ratio (G/D; also referred to as a GD ratio) of a peak intensity of a G band to a peak intensity of a D band is 0.5 to 4.0. It is considered that the GD ratio indicates a crystal state of the surface coating of the surface of the positive electrode active material. As the GD ratio is higher, crystallinity is higher (the number of defects is smaller). In a case where the GD ratio is within the above-described range, it is preferable from the viewpoint that the electron conductivity z of the positive electrode active material can be controlled in the appropriate range.

The GD ratio is preferably 0.5 to 3.5, preferably 0.5 to 3.0, preferably 0.5 to 2.0, more preferably 0.7 to 1.3, still more preferably 0.8 to 1.2, even more preferably 0.9 to 1.2, and even still more preferably 1.0 to 1.2.

The GD ratio can be measured by Raman spectroscopic analysis according to a method described in Examples.

Hereinafter, each component constituting the positive electrode slurry according to the embodiment of the present invention will be described in detail.

<Positive electrode active material>

As the positive electrode active material, a positive electrode active material capable of reversibly intercalating and deintercalating lithium ions is preferable. The material is not particularly limited as long as it exhibits the above-described electron conductivity, and may be transition metal oxides, organic matter, elements capable of being complexed with Li, such as sulfur, complexes of sulfur and metal, or the like.

Among these, as the positive electrode active material, lithium-containing transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio $Li/M^a$ is 0.3 to 2.2.

Specific examples of the lithium-containing transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxide having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

In the present invention, the positive electrode active material is preferably the lithium-containing transition metal phosphoric acid compound (MC), and more preferably $LiFePO_4$.

A shape of the positive electrode active material is not particularly limited, but is preferably a particulate shape.

An average particle diameter (sphere-equivalent average particle diameter) of the positive electrode active material is not particularly limited. For example, the average particle diameter can be 0.1 to 50 $\mu$m, preferably 0.2 to 30 $\mu$m, more preferably 0.5 to 20 $\mu$m, and still more preferably 0.8 to 10 $\mu$m.

In order to allow the positive electrode active material to have a predetermined particle diameter, a typical pulverizer or classifier may be used. A positive electrode active material obtained using a baking method may be used after being washed with water, an acidic aqueous solution, an alkaline aqueous solution, or an organic solvent.

In a case where a commercially available positive electrode active material is used, the average particle diameter of the positive electrode active material is adopted as the value described in the catalog of the manufacturer.

In a case where the information on the average particle diameter of the manufacturer cannot be obtained or in a case where a synthesized positive electrode active material is used, the average particle diameter value (volume-based median diameter D50 in water) obtained by dispersing the positive electrode active material in water and measuring the average particle diameter with a laser diffraction/scattering-type particle size distribution analyzer (for example, Particle LA-960V2 manufactured by HORIBA, Ltd.) is adopted. The same applies to an average particle diameter of solid particles other than the positive electrode active material.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material. These surface coating layers can function as an interface resistance-stabilizing layer.

Examples of a surface coating material include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

From the viewpoint of increasing the electron conductivity to a desired level, it is preferable that the surface of the positive electrode active material is coated with the carbon-based material. It is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

A content of the positive electrode active material in the solid content of the positive electrode slurry depends on the content y of the conductive auxiliary agent, but is preferably 96.00% to 99.97% by mass, more preferably 98.00% to 99.97% by mass, still more preferably 99.00% to 99.95% by mass, even more preferably 99.20% to 99.95% by mass, even still more preferably 99.50% to 99.95% by mass, further more preferably 99.55% to 99.95% by mass, even further more preferably 99.70% to 99.95% by mass, and even further still more preferably 99.90% to 99.95% by mass.

<Conductive auxiliary agent>

The conductive auxiliary agent is not particularly limited as long as the specific surface area is 100 $m^2$/g or more, and a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In the present invention, the conductive auxiliary agent is preferably a carbonaceous material, more preferably carbon blacks, and still more preferably ketjen black.

In a case where the positive electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

Examples of a commercially available product of the conductive auxiliary agent include the following.

Ketjen black: Carbon ECP (specific surface area = 890 $m^2$/g), Carbon ECP600JD (specific surface area = 1,480 $m^2$/g), and Carbon ECP200L (specific surface area = 430 $m^2$/g) (all manufactured by LION SPECIALTY CHEMICALS CO., LTD.)

Carbon black: LITX300 (specific surface area = 180 $m^2$/g) and LITX-HP (specific surface area = 100 $m^2$/g) (both manufactured by Cabot Corporation)

Carbon nanotube (CNT): BT1001M (specific surface area = 272 $m^2$/g) and BT1003M (specific surface area = 230 $m^2$/g) (both manufactured by LG Chem); JENOTUBE6A (specific surface area = 680 $m^2$/g) and JENOTUBE10B (specific surface area = 230 $m^2$/g) (both manufactured by JEIO)

One kind of conductive auxiliary agent or two or more kinds of conductive auxiliary agents may be used.

A shape of the conductive auxiliary agent is not particularly limited, but is preferably a particulate shape.

An average particle diameter (sphere-equivalent average particle diameter) of the conductive auxiliary agent is not particularly limited. For example, the average particle diameter is preferably 0.01 to 50 $\mu$m, more preferably 0.1 to 10 $\mu$m, and still more preferably 0.2 to 2.0 $\mu$m.

The conductive auxiliary agent may be subjected to a surface treatment.

A method of the surface treatment is not particularly limited, and a surface treatment using a chemical treatment agent or an atomic layer deposition (ALD) treatment is preferable.

As the chemical treatment agent, an organic silicon compound (more preferably a silane coupling agent), an organic phosphonic acid compound, or the like is preferable; and examples thereof include methyltrimethoxysilane (MTMS), octadecyltrimethoxysilane, hexamethyldisilazane, tetraethoxysilane, trifluoropropyltrimethoxysilane, vinyltrimethoxysilane, phenyltrimethoxysilane, 3-aminopropyltriethoxysilane, 1H,1H,2H,2H-perfluorooctyltriethoxysilane, trimethoxy(octyl)silane, 1H,1H,2H,2H-perfluorooctane phosphonic acid, 1-octyl phosphonic acid, and perfluoropolyether triethoxysilane (KY1903 (trade name)).

In the ALD treatment, examples of a layer to be deposited include $HfO_2$, $SiO_2$, $ZrO_2$, $Ta_2O_5$, and $TiO_2$.

<Electrolyte>

As the electrolyte, an electrolyte used for the electrolytic solution of the semi-solid state secondary battery can be used. A metal salt is preferable, and examples thereof include a lithium salt, a potassium salt, a sodium salt, a calcium salt, and a magnesium salt.

As the lithium salt, a lithium salt which is usually used for an electrolyte of a lithium ion secondary battery is preferable, and examples thereof include the following lithium salts.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; an inorganic chloride salt such as $LiAlCl_4$; and the like

(L-2) Fluorine-containing organic lithium salt: perfluoroalkane sulfonate such as $LiCF_3SO_3$; perfluoroalkanesulfonylimide salt such as $LiN(CF_3SO_2)_2$, $LiN(CF_3CF_2SO_2)_2$, $LiN(FSO_2)_2$, and $LiN(CF_3SO_2)(C_4F_9SO_2)$; perfluoroalkane sulfonylmethide salt such as $LiC(CF_3SO_2)_3$; fluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF5(CF_2CF_2CF_2CF_3)]$, $Li[PF_4(CF_2CF_2CF_2CF_3)_2]$, and $Li[PF_3(CF_2CF_2CF_2CF_3)_3]$; and the like

(L-3) Oxalatoborate salt: lithium bis(oxalato)borate, lithium difluorooxalatoborate, and the like

Among these, $LiPF_6$, $LiBF_4$, $LiAsF_6$, $LiSbF_6$, $LiClO_4$, $Li(R^{f1}SO_3)$, $LiN(R^{f1}SO_2)_2$, $LiN(FSO_2)_2$, or $LiN(R^{f1}SO_2)(R^{f2}SO_2)$ is preferable; $LiPF_6$, $LiBF_4$, $LiN(R^{f1}SO_2)_2$, $LiN(FSO_2)_2$, or $LiN(R^{f1}SO_2)(R^{f2}SO_2)$ is more preferable; and $LiPF_6$ is particularly preferable. Here, $R^{f1}$ and $R^{f2}$ each represent a perfluoroalkyl group, and the number of carbon atoms in the perfluoroalkyl group is preferably 1 to 6.

As the lithium salt used in the electrolytic solution according to the embodiment of the present invention, one kind of electrolyte may be used alone, or two or more kinds of electrolytes may be arbitrarily combined.

In the present invention, it is preferable that the above-described electrolyte is used as an electrolytic solution by adding the electrolyte to a dispersion medium. A concentration of the lithium salt in the electrolytic solution is usually 10.0% to 50.0% by mass, preferably 15.0% to 30.0% by mass. The molar concentration is preferably 0.5 to 1.5 M.

<Dispersion medium>

As the dispersion medium, a non-aqueous solvent is used.

As the non-aqueous solvent, aprotic organic solvents are preferable, and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

A compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, $\gamma$-butyrolactone, $\gamma$-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidone (NMP), N-methyloxazolidinone, N,N'-dimethylimidazolidinone, nitromethane, nitroethane, sulfolane, trimethyl phosphate, dimethylsulfoxide, and dimethylsulfoxide phosphoric acid. These may be used alone or in combination of two or more. Among these, at least one of the group consisting of ethylene carbonate, propylene carbonate, dimethyl carbonate, diethyl carbonate, ethyl methyl carbonate, and γ-butyrolactone is preferable; and a combination of a high-viscosity (high-dielectric constant) solvent (for example, relative permittivity $\varepsilon \geq 30$) such as ethylene carbonate and propylene carbonate and a low-viscosity solvent (for example, viscosity $\leq 1$ mPa·s) such as dimethyl carbonate, ethyl methyl carbonate, and diethyl carbonate is more preferable. By using a mixed solvent having such a combination, dissociation properties of electrolyte salts and mobility of ions are improved. As the above-described non-aqueous solvent, a combination of ethylene carbonate, dimethyl carbonate, and ethyl methyl carbonate is particularly preferable.

The non-aqueous solvent used in the present invention is not limited to these solvents.

The dispersion medium is preferably a mixed solvent of ethylene carbonate (EC), dimethyl carbonate (DMC), and ethyl methyl carbonate (EMC).

The positive electrode slurry according to the embodiment of the present invention does not contain a binder. The binder herein means a binder used in a general non-aqueous electrolytic solution secondary battery, and is, for example, a thermoplastic resin such as a fluororesin (polytetrafluoroethylene (PTFE), polyvinylidene fluoride (PVDF), or the like), polyethylene, polypropylene, polyacrylic, and polyimide; an elastomer such as ethylene-propylene-diene rubber (EPDM), sulfonated EPDM, styrene butadiene rubber (SBR), and fluororubber; or a polysaccharide polymer.

In the positive electrode slurry according to the embodiment of the present invention, a content of the solid content in the positive electrode slurry is preferably more than 60% by mass, more preferably 65% by mass or more, and still more preferably 70% by mass or more. The content of the solid content is preferably 60% to 95% by mass, more preferably 65% to 92% by mass, still more preferably 70% to 90% by mass, even more preferably 72% to 88% by mass, and particularly preferably 75% to 85% by mass.

<Other components>

The positive electrode slurry according to the embodiment of the present invention can contain, as desired, an ionic liquid, a thickener, an antifoaming agent, a leveling agent, a dehydrating agent, an antioxidant, or the like. These components can be used as those which are usually used in the non-aqueous electrolytic solution secondary battery.

In a case where the positive electrode slurry according to the embodiment of the present invention contains other components, a content of the other components is preferably 0.05 to 1.5 parts by mass and more preferably 0.1 to 1.0 parts by mass with respect to 100 parts by mass of the total content of the positive electrode active material and the conductive auxiliary agent.

[Non-aqueous electrolytic solution secondary battery]

The non-aqueous electrolytic solution secondary battery according to the embodiment of the present invention (hereinafter, also referred to as "secondary battery according to the embodiment of the present invention") includes a positive electrode, a separator, and a negative electrode in this order, in which the above-described positive electrode slurry according to the embodiment of the present invention is used as a positive electrode active material layer.

Before the description of the secondary battery according to the embodiment of the present invention, a structure of a general non-aqueous electrolytic solution secondary battery will be described.

FIG. 1 is a schematic cross-sectional view showing a laminated structure of a general non-aqueous electrolytic solution secondary battery 10, including a working electrode which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in the case of lithium ion secondary battery, during charge, while electrons ($e^-$) are supplied to the negative electrode side through an external circuit, lithium ions ($Li^+$) move from the positive electrode through the electrolytic solution and are accumulated in the negative electrode. On the other hand, during discharge, while the lithium ions ($Li^+$) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

Subsequently, a basic configuration characteristic of the semi-solid state secondary battery will be described. As described above, in the semi-solid state secondary battery, the electrode active material layer is formed in a slurry state containing an electrode active material and an electrolyte. Therefore, the secondary battery according to the embodiment of the present invention is different from a general non-aqueous electrolytic solution secondary battery in terms of the fact that the electrode active material layer is a layer formed of a slurry (suspension or dispersion liquid) obtained by dispersing the electrode active material in a non-aqueous electrolytic solution.

That is, in a general non-aqueous electrolytic solution secondary battery, a coating liquid is prepared in which the electrode active material is dispersed in a medium containing no electrolyte, the coating liquid is applied onto a collector to form a coating film, and then the coating film is dried to form a thin film-shaped electrode active material layer. The coating liquid is usually blended with a binding material (binder), and a hard electrode active material layer in which electrode active material particles are firmly bound to each other is formed. Since the non-aqueous electrolytic solution is present on the electrode active material layer formed in this way (between the negative electrode active material layer and the positive electrode active material layer), the electrode active material layer is in a state of a hard solid particle layer as a whole even in a case where there is a portion in which the non-aqueous electrolytic solution can permeate, and is not a slurry layer.

On the other hand, in the semi-solid state secondary battery, the electrode active material layer is an electrode slurry layer obtained by dispersing the solid particles containing the electrode active material and the conductive auxiliary agent in the non-aqueous electrolytic solution which is obtained by dissolving the lithium salt (electrolyte) in the non-aqueous solvent. In a case where the electrode slurry layer functions as the electrode active material layer, a strong bonding property is not required between the electrode active material particles, and thus the electrode slurry layer generally does not contain a binding material. The basic layer configuration of the semi-solid state secondary battery is the same as the layer configuration shown in FIG. 1, except that the electrode active material layer is an electrode slurry layer and the electrode slurry layer and the separator are in contact with each other.

In the secondary battery according to the embodiment of the present invention, the positive electrode active material layer is a slurry layer formed of the positive electrode slurry according to the embodiment of the present invention.

As the negative electrode active material layer, a negative electrode active material layer formed of a typical negative electrode slurry can be used.

In the secondary battery according to the embodiment of the present invention, each of materials and members such as the positive electrode collector, the negative electrode active material, the negative electrode collector, and the separator is not particularly limited, except that the positive electrode slurry according to the embodiment of the present invention is used for forming the positive electrode active material layer. As these materials, members, and the like, those used for a typical secondary battery can be appropriately adopted. For the members and the manufacturing methods which are usually used for these secondary batteries, for example, JP2016-201308A, JP2005-108835A, JP2012-185938A, WO2018/135395A, and the like can be appropriately referred to.

A thickness of the positive electrode active material layer (slurry layer) in the secondary battery according to the embodiment of the present invention is not particularly limited, and can be set to, for example, 5 to 500 $\mu$m, preferably 20 to 300 $\mu$m.

A thickness of the negative electrode active material layer in the secondary battery according to the embodiment of the present invention is not particularly limited, and can be set to, for example, 5 to 500 $\mu$m, preferably 20 to 300 $\mu$m.

[Method for manufacturing non-aqueous electrolytic solution secondary battery]

The method for manufacturing a non-aqueous electrolytic solution secondary battery according to the embodiment of the present invention includes applying the positive electrode slurry according to the embodiment of the present invention onto a positive electrode collector to form a slurry-like positive electrode active material layer.

A method of applying the slurry is not particularly limited, and for example, the slurry can be applied by using a roll coater, drop coating, pressing (roll pressing or flat plate pressing) the slurry after evenly installing the slurry on the collector, or installing the slurry in a frame having a specified thickness and pressing the slurry.

In the method for manufacturing a non-aqueous electrolytic solution secondary battery according to the embodiment of the present invention, a typical method can be appropriately adopted except that the positive electrode active material layer is formed of a specific positive electrode slurry. For example, JP2016-201308A, JP2005-108835A, JP2012-185938A, JP2017-147222A, and the like can be appropriately referred to.

The non-aqueous electrolytic solution secondary battery according to the embodiment of the present invention can be mounted on electronic apparatuses such as a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, a backup power supply, and a memory card. In addition, in a case of being used for consumer applications, the non-aqueous electrolytic solution secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Hereinafter, the present invention will be described in more detail with reference to Examples. The present invention is not interpreted as being limited thereto.

Examples

<Preparation of positive electrode active material>

10 parts by mass of an $LiFePO_4$ (LFP) powder raw material (manufactured by Gelon Lib Group Co., Ltd., particle diameter: 2.5 $\mu$m) was mixed with 90 parts by mass of water, and a styrene-maleic acid anhydride copolymer was added thereto as an additive at an additive input amount shown in Table 1, and the mixture was stirred and mixed for 3 hours. Thereafter, the mixture was fired at 700°C for 10 hours in a nitrogen atmosphere to obtain positive electrode active materials LFP1, LFP1-2, LFP2, LFP3, LFP4, and LFP5, which were surface-coated with a carbon-based material.

10 parts by mass of an NCM ($LiNi_{1/3}Co_{1/3}Mn_{1/3}O_2$) powder raw material (manufactured by Toshima Manufacturing Co., Ltd., NCM111 (trade name), particle diameter: 8 $\mu$m) was mixed with 90 parts by mass of water, and a styrene-maleic acid anhydride copolymer was added thereto as an additive at the additive input amount shown in Table 1, and the mixture was stirred and mixed for 3 hours. Thereafter, the mixture was fired at 700°C for 10 hours in a nitrogen atmosphere to obtain positive electrode active materials NCM1 and NCM2, which were surface-coated with a carbon-based material.

<Measurement of electron conductivity of positive electrode active material>

An electron conductivity of each of the positive electrode active materials obtained above was measured by the following method.

30 mg of the positive electrode active material was put into a cylindrical tube having an inner diameter of 10 mm, and pressed at 10 MPa to obtain a pressed product of the positive electrode active material (thickness: approximately 0.15 mm). Thereafter, a stainless steel rod having a diameter of 10 mm was inserted from upper and lower opening portions of the tube, the rod was disposed such that an end part of the rod was in contact with the surface of the pressed product, a constant voltage of 10 mV was applied, and resistance measurement was performed. The measurement was carried out three times (N3), and an average value of the obtained resistance values was calculated and defined as a powder resistance (m$\Omega$). Using the obtained powder resistance, the electron conductivity (mS/cm) of the positive electrode active material was calculated from the following expression. In the following expression, a film thickness means a thickness (cm) of the pressed product, and an area means an area ($cm^2$) of the circular surface (one surface) of the pressed product. An electrochemical measuring device (VMP-300 (trade name), manufactured by Biologic) was used for the resistance measurement.

The measurement results are shown in Table 1.

$$\text{Electron conductivity} = 1 \div \text{Powder resistance} \times \text{Film thickness} \div \text{Area}$$

[Table 1]

| Positive electrode active material | Additive input amount (part by mass) | Electron conductivity of positive electrode active material (mS/cm) |
|---|---|---|
| LFP1 | 0.05 | 0.2 |
| LFP1-2 | 0.08 | 1.1 |
| LFP2 | 0.1 | 1.4 |
| LFP3 | 0.2 | 3.0 |
| LFP4 | 0.4 | 6.0 |
| LFP5 | 0.5 | 8.0 |
| NCM1 | 0.05 | 0.5 |

(continued)

| Positive electrode active material | Additive input amount (part by mass) | Electron conductivity of positive electrode active material (mS/cm) |
|---|---|---|
| NCM2 | 0.1 | 1.3 |

<Preparation of conductive auxiliary agent>

The following were prepared as a conductive auxiliary agent.

AB: Li-100 (trade name), acetylene black, specific surface area = 69 $m^2/g$, manufactured by Denka Company Limited
ECP600JD: Carbon ECP600JD (trade name), ketjen black, specific surface area = 1,480 $m^2/g$, manufactured by LION SPECIALTY CHEMICALS CO., LTD.
LITX300: LITX300 (trade name), carbon black, specific surface area = 180 $m^2/g$, manufactured by Cabot Corporation
Carbon ECP: Carbon ECP (trade name), ketjen black, specific surface area = 890 $m^2/g$, manufactured by LION SPECIALTY CHEMICALS CO., LTD.

<Preparation of non-aqueous electrolytic solution A>

A mixed solvent in which ethylene carbonate (EC), dimethyl carbonate (DMC), and ethyl methyl carbonate (EMC) were mixed at a mass ratio of EC:DMC:EMC = 3:4:3 was blended with $LiPF_6$ as a lithium salt to a concentration of 1 M to prepare a non-aqueous electrolytic solution (non-aqueous electrolytic solution A).

<Production of positive electrode slurry>

The positive electrode active material, the conductive auxiliary agent, and the non-aqueous electrolytic solution A shown in Table 2 were mixed at 1,250 rpm for 90 seconds using a centrifugal planetary mixer (manufactured by Thinky Corporation; Awatori Nentaro (trade name)) to obtain a positive electrode slurry. A content of each component in the positive electrode slurry was as follows.
The amounts of the positive electrode active material and the conductive auxiliary agent were set such that the contents of the positive electrode active material and the conductive auxiliary agent in the total of the positive electrode active material and the conductive auxiliary agent were respectively the proportion (% by mass) shown in Table 2.
The amount of the non-aqueous electrolytic solution A in the positive electrode slurry was set to 15 ml so that the solid content of the positive electrode slurry was 75% by mass.
In this way, a positive electrode slurry containing the positive electrode active material, the conductive auxiliary agent, and the electrolyte was obtained.

<Electric resistance of surface of particles of positive electrode active material>

As an indicator of conductivity of a surface of particles of the positive electrode active material, an electrical resistance of the surface of particles of the positive electrode active material was measured as follows using an atomic force microscope (AFM).
10 mg of particles of the positive electrode active material was adhered to a carbon tape and installed on a sample stage of a scanning probe microscope (PeakForce TUNA (trade name), manufactured by Bruker Corporation). A cantilever of the microscope was brought close to the particles of the positive electrode active material, and a current value I (unit: nA) flowing in a case where a voltage was applied was measured in a microcurrent measurement mode. The voltage was applied in increments of 0.1 V from -1.5 V to +1.5 V. In this way, data of 31 points of the current value I with respect to the voltage value V was obtained. The obtained voltage value V and the current value I were fitted with a straight line (the following expression) to obtain an electrical resistance value R ($\Omega$) as a slope.

$$\cdot \; V = RI \; (\text{Expression})$$

<Carbon amount on surface of positive electrode active material layer>

Each of positive electrodes obtained in the same manner as in <Production of non-aqueous electrolytic solution secondary battery> described below was punched out to have a diameter of 10 mm, and a surface of a positive electrode active material layer (a surface opposite to a positive electrode collector) was subjected to SEM observation at an acceleration voltage of 1.5 kV using a field emission scanning electron microscope device (FE-SEM) (manufactured by JEOL Ltd., JSM 7100F (trade name)), and element analysis was carried out by automatic detection using an energy dispersive X-ray spectroscope (EDX) (manufactured by Thermo Fisher Scientific Inc., Noran System 7 Type (trade name)). A mass ratio of a carbon amount to the total element amount detected by the automatic detection was defined as a C amount (% by mass) on the surface of the positive electrode active material layer.

<GD ratio of surface of particles of positive electrode active material>

10 mg of each of the particles of the positive electrode active material obtained above was adhered to a carbon tape, and a Raman spectrum was acquired by irradiating the carbon tape with a 532 nm laser using a confocal Raman microscope (manufactured by Renishaw plc., inVia Qontor (trade name)). A peak intensity ratio of the G band (wave number: 1,600 cm$^{-1}$) to the peak intensity of the D band (wave number: 1,350 cm$^{-1}$) of the Raman spectrum was measured at 10 points, and an average value thereof was defined as the GD ratio (G/D ratio).

The GD ratios of the positive electrode active materials LFP1-2, LFP2 to LFP5, and NCM2 used in Examples were all in a range of 0.7 to 1.4.

<Evaluation method of adhesiveness (adhesion strength) of positive electrode active material layer to collector>

The positive electrode slurry was applied onto an aluminum collector (length: 4.5 cm, width: 6.5 cm) placed horizontally such that the thickness was 300 $\mu$m and the coating area was 4 cm square, thereby producing a positive electrode consisting of the collector and the slurry-like positive electrode active material layer.

An area (S1) of the positive electrode active material layer was measured while maintaining the horizontal level. The area was measured by capturing an image of the positive electrode active material layer using a digital microscope imaging device (VHX-7000 manufactured by KEYENCE CORPORATION) and calculating the area of the positive electrode active material layer using the same device.

Next, the positive electrode was placed on an adsorption plate such that the collector was in contact with the adsorption plate, and was adsorbed to the adsorption plate. In the adsorption state, the adsorption plate was rotated by 90° such that the surface of the positive electrode active material layer was perpendicular to the horizontal direction, and the adsorption plate was fixed and held for 1 minute. Thereafter, the adsorption plate was returned to the horizontal position such that the positive electrode active material layer was on the upper side, and an area (S2) of the positive electrode active material layer was measured again within 15 seconds after the return to the horizontal position. From S1 and S2, a rate of change in area before and after the fixing was determined according to the following expression, and the obtained rate of change in area was evaluated according to the following evaluation standard.

S2 was smaller than S1 in a case where the positive electrode active material layer collapsed while being close to a powder state and being fixed vertically. S2 was larger than S1 in a case where the fluidity in the positive electrode active material layer was high and the positive electrode active material layer was vertically fixed and then the positive electrode active material layer was drooped.

$$\text{(Rate of change in area)} = |(S2) - (S1)|/(S1) \times 100 \ (\%)$$

-Evaluation standard-

A: less than 0.5%
B: 0.5% or more and less than 1%
C: 1% or more and less than 2%
D: 2% or more and less than 3%
E: 3% or more and less than 4%
F: 4% or more and less than 5%
G: 5% or more

<Evaluation method for electron conductivity of electrode>

The positive electrode slurry was applied onto the aluminum collector to form a positive electrode active material layer having a thickness of 300 $\mu$m and an area of 16 cm$^2$, and then another aluminum collector was superposed on the surface of the positive electrode active material layer to form a laminate of collector-positive electrode active material layer-collector. An aluminum tab was attached to the two aluminum collectors of the laminate by ultrasonic welding, the laminate was sandwiched between the two aluminum laminated films, and a heat seal and a vacuum seal were performed to produce an electron conductivity evaluation cell. A constant voltage of 10 mV was applied to the cell, and a resistance was measured. The measurement was carried out three times (N3), and an average of the obtained resistance values was defined as an electrode resistance (m$\Omega$). Using the obtained electrode resistance, an electron conductivity of the electrode (positive electrode) was calculated from the following expression. In the following expression, a film thickness means a thickness (cm) of the laminate, and an area means an area (cm$^2$) of the positive electrode active material layer. An electrochemical measuring device (VMP-300 (trade name), manufactured by BioLogic) was used for the resistance measurement.

$$\text{Electron conductivity} = 1 \div \text{Electrode resistance} \times \text{Film thickness} \div \text{Area}$$

-Evaluation standard-

A: 20 mS/cm or more
B: 16 mS/cm or more and less than 20 mS/cm
C: 12 mS/cm or more and less than 16 mS/cm
D: 8 mS/cm or more and less than 12 mS/cm
E: 4 mS/cm or more and less than 8 mS/cm
F: 2 mS/cm or more and less than 4 mS/cm
G: less than 2 mS/cm

<Production of non-aqueous electrolytic solution secondary battery>

1) Production of positive electrode

Each of the positive electrode slurries obtained above was applied to an aluminum collector so as to have a thickness of 300 $\mu$m, thereby producing a positive electrode consisting of a positive electrode collector and a positive electrode active material layer (slurry).

2) Production of negative electrode

64% by mass of artificial graphite (manufactured by Showa Denko K.K., UF-G30 (trade name)) as a negative electrode active material, 1% by mass of acetylene black (manufactured by Denka Company Limited, Denka Black (trade name)) as a conductive auxiliary agent, and 35% by mass of the non-aqueous electrolytic solution A were mixed at 1,250 rpm for 90 seconds using a centrifugal planetary mixer (manufactured by Thinky Corporation; Awatori Nentaro (trade name)) to obtain a slurry for forming a negative electrode.
The slurry for forming a negative electrode obtained as described above was applied onto a copper collector so as to have a thickness of 300 $\mu$m, thereby producing a negative electrode consisting of a negative electrode collector and a negative electrode active material layer (slurry).

3) Production of battery

Thereafter, a separator was laminated on the negative electrode, and then the positive electrode was laminated thereon to form a laminate of negative electrode collector-negative electrode active material layer (slurry)-separator-positive electrode active material layer (slurry)-positive electrode collector. An aluminum tab was attached to an end part of the aluminum collector and a nickel tab was attached to an end part of the copper collector by ultrasonic welding to obtain an electrode group. The electrode group was sandwiched between two aluminum laminate films, three sides were heat-sealed, and the remaining one side was vacuum-sealed to produce a laminated type battery (semi-solid state secondary battery).

<Cycle characteristics>

The laminated battery obtained above was charged and discharged under the following condition 1 to measure an initial discharge capacity, and then charged and discharged for 200 cycles under the following condition 2 to measure a

14

discharge capacity (output evaluation discharge capacity) at the 200th cycle. From the obtained initial discharge capacity and the obtained discharge capacity for output evaluation, a discharge capacity retention rate was calculated according to the following expression, and the obtained value was evaluated by applying the obtained value to the following evaluation standard.

The initial discharge capacity of all the laminated batteries was 150 mAh/g.

(Discharge capacity retention rate) = [(Discharge capacity for output evaluation)/(Initial discharge capacity)] $\times$ 100 (%)

-Condition 1-

· Charging and discharging conditions of Experiments Nos. 1 to 25 and 29 to 35 (experiments using LFP as an active material)
Constant current (CC)-constant voltage (CV) charging: current value of 10 mA, upper limit voltage of 3.6 V, termination current value of 0.5 mA
CC discharging: current value of 10 mA, termination voltage value of 2.0 V
· Charging and discharging conditions of Experiments Nos. 26 to 28 (experiments using NMC as an active material)
CC-CV charging: current value of 10 mA, upper limit voltage of 4.2 V, termination current value of 0.5 mA
CC discharging: current value of 10 mA, upper limit voltage of 3.0 V

-Condition 2-

· Charging and discharging conditions of Experiments Nos. 1 to 25 and 29 to 35 (experiments using LFP as an active material)

CC-CV charging: current value of 10 mA, upper limit voltage of 3.6 V, termination current value of 0.5 mA

CC discharging: current value of 10 mA, upper limit voltage of 2.0 V

· Charging and discharging conditions of Experiments Nos. 26 to 28 (experiments using NMC as an active material)

CC-CV charging: current value of 10 mA, upper limit voltage of 4.2 V, termination current value of 0.5 mA

CC discharging: current value of 10 mA, upper limit voltage of 3.0 V

-Evaluation standard-

A: 95% or more

B: 93% or more and less than 95%

C: 91% or more and less than 93%

D: 89% or more and less than 91%

E: 87% or more and less than 89%

F: 85% or more and less than 87%

G: less than 85%

[Table 2]

| Experiment No. | Experimental Example | Positive electrode active material | | Conductive auxiliary agent | | Specific surface area of conductive auxiliary agent x | Specific surface area × content x × y | Electron conductivity of positive electrode active material z | Satisfaction of Expression A |
|---|---|---|---|---|---|---|---|---|---|
| | | Type | Content | Type | Content y | | | | |
| | | | wt% | | wt% | m²/g | | mS/cm | |
| 1 | Comparative Example | LFP1 | 98.00 | AB | 2.00 | 69 | 138 | 0.2 | TRUE |
| 2 | Comparative Example | LFP1 | 96.00 | AB | 4.00 | 69 | 276 | 0.2 | TRUE |
| 3 | Comparative Example | LFP1 | 92.00 | AB | 8.00 | 69 | 552 | 0.2 | TRUE |
| 4 | Comparative Example | LFP2 | 92.00 | AB | 8.00 | 69 | 552 | 1.4 | FALSE |
| 5 | Comparative Example | LFP3 | 92.00 | AB | 8.00 | 69 | 552 | 3.0 | FALSE |
| 6 | Comparative Example | LFP1 | 99.20 | ECP600JD | 0.80 | 1480 | 1184 | 0.2 | FALSE |
| 7 | Comparative Example | LFP3 | 99.20 | ECP600JD | 0.80 | 1480 | 1184 | 3.0 | FALSE |
| 8 | Comparative Example | LFP2 | 96.00 | AB | 4.00 | 69 | 276 | 1.4 | TRUE |
| 9 | Comparative Example | LFP3 | 96.00 | AB | 4.00 | 69 | 276 | 3.0 | TRUE |
| 10 | Example | LFP2 | 99.95 | LITX300 | 0.05 | 180 | 9 | 1.4 | TRUE |
| 11 | Example | LFP2 | 99.90 | LITX300 | 0.10 | 180 | 18 | 1.4 | TRUE |
| 12 | Example | LFP2 | 99.80 | LITX300 | 0.20 | 180 | 36 | 1.4 | TRUE |
| 13 | Example | LFP2 | 99.50 | LITX300 | 0.50 | 180 | 90 | 1.4 | TRUE |
| 14 | Example | LFP2 | 99.95 | Carbon ECP | 0.05 | 890 | 44.5 | 1.4 | TRUE |
| 15 | Example | LFP2 | 99.90 | Carbon ECP | 0.10 | 890 | 89 | 1.4 | TRUE |
| 16 | Example | LFP2 | 99.70 | Carbon ECP | 0.30 | 890 | 267 | 1.4 | TRUE |
| 17 | Example | LFP2 | 99.55 | Carbon ECP | 0.45 | 890 | 400.5 | 1.4 | TRUE |
| 18 | Comparative Example | LFP2 | 99.50 | Carbon ECP | 0.50 | 890 | 445 | 1.4 | TRUE |
| 19 | Example | LFP3 | 99.95 | Carbon ECP | 0.05 | 890 | 44.5 | 3.0 | TRUE |
| 20 | Example | LFP3 | 99.70 | Carbon ECP | 0.30 | 890 | 267 | 3.0 | TRUE |
| 21 | Comparative Example | LFP3 | 99.50 | Carbon ECP | 0.50 | 890 | 445 | 3.0 | FALSE |
| 22 | Example | LFP4 | 99.95 | Carbon ECP | 0.05 | 890 | 44.5 | 6.0 | TRUE |

| Experiment No. | Experimental Example | Positive electrode active material | | Conductive auxiliary agent | | Specific surface area of conductive auxiliary agent x | Specific surface area × content x × y | Electron conductivity of positive electrode active material z | Satisfaction of Expression A |
|---|---|---|---|---|---|---|---|---|---|
| | | Type | Content | Type | Content y | | | | |
| | | | wt% | | wt% | m$^2$/g | | mS/cm | |
| 23 | Example | LFP4 | 99.80 | Carbon ECP | 0.20 | 890 | 178 | 6.0 | TRUE |
| 24 | Example | LFP4 | 99.65 | Carbon ECP | 0.35 | 890 | 311.5 | 6.0 | FALSE |
| 25 | Comparative Example | LFP4 | 99.50 | Carbon ECP | 0.50 | 890 | 445 | 6.0 | FALSE |
| 26 | Comparative Example | NCM1 | 99.70 | Carbon ECP | 0.30 | 890 | 267 | 0.5 | TRUE |
| 27 | Example | NCM2 | 99.70 | Carbon ECP | 0.30 | 890 | 267 | 1.3 | TRUE |
| 28 | Example | NCM2 | 99.55 | Carbon ECP | 0.45 | 890 | 400.5 | 1.3 | TRUE |
| 29 | Example | LFP1-2 | 99.70 | Carbon ECP | 0.30 | 890 | 267 | 1.1 | TRUE |
| 30 | Example | LFP3 | 99.55 | Carbon ECP | 0.45 | 890 | 400 | 3.0 | TRUE |
| 31 | Example | LFP4 | 99.75 | Carbon ECP | 0.25 | 890 | 225 | 6.0 | TRUE |
| 32 | Example | LFP4 | 99.72 | Carbon ECP | 0.28 | 890 | 250 | 6.0 | FALSE |
| 33 | Example | LFP4 | 99.55 | Carbon ECP | 0.45 | 890 | 400 | 6.0 | FALSE |
| 34 | Example | LFP5 | 99.88 | Carbon ECP | 0.12 | 890 | 110 | 8.0 | TRUE |
| 35 | Example | LFP5 | 99.85 | Carbon ECP | 0.15 | 890 | 130 | 8.0 | FALSE |

(Note to Table 2)

In the column of "Satisfaction of Expression A", it is described whether or not x, y, and z satisfy $z \leq (-0.0175 \times x \times y) + 10$. A case where the expression was satisfied is indicated as "TRUE", and a case where the expression was not satisfied is indicated as "FALSE".

[Table 3]

| Experiment No. | Experimental Example | Electrical resistance of surface of positive electrode active material particles | C amount of positive electrode active material layer | GD ratio of active material by Raman | Adhesion strength | Electrode | Battery performance |
|---|---|---|---|---|---|---|---|
| | | $\Omega$ | % by mass | | | Electron conductivity | Cycle **characteristics** |
| 1 | Comparative Example | $2.0 \times 10^8$ | 4.6 | 0.5 | G | G | G |
| 2 | Comparative Example | $2.0 \times 10^8$ | 5.6 | 0.5 | G | G | G |
| 3 | Comparative Example | $2.0 \times 10^8$ | 9.4 | 0.5 | G | G | G |
| 4 | Comparative Example | $4.5 \times 10^7$ | 9.5 | 1.0 | G | G | G |
| 5 | Comparative Example | $3.8 \times 10^7$ | 9.7 | 1.2 | G | G | G |
| 6 | Comparative Example | $2.0 \times 10^8$ | 3.5 | 0.5 | G | G | G |
| 7 | Comparative Example | $3.8 \times 10^7$ | 3.5 | 1.2 | G | G | G |
| 8 | Comparative Example | $4.5 \times 10^7$ | 6.6 | 1.0 | G | G | G |
| 9 | Comparative Example | $3.8 \times 10^7$ | 6.6 | 1.2 | G | G | G |
| 10 | Example | $4.5 \times 10^7$ | 2.6 | 1.0 | A | A | A |
| 11 | Example | $4.5 \times 10^7$ | 3.2 | 1.0 | A | A | A |
| 12 | Example | $4.5 \times 10^7$ | 3.5 | 1.0 | B | B | B |
| 13 | Example | $4.5 \times 10^7$ | 3.6 | 1.0 | B | B | B |
| 14 | Example | $4.5 \times 10^7$ | 2.9 | 1.0 | A | A | A |
| 15 | Example | $4.5 \times 10^7$ | 3.4 | 1.0 | A | A | A |
| 16 | Example | $4.5 \times 10^7$ | 4.6 | 1.0 | C | C | C |
| 17 | Example | $4.5 \times 10^7$ | 4.6 | 1.0 | D | D | D |
| 18 | Comparative Example | $4.5 \times 10^7$ | 5.6 | 1.0 | G | G | G |
| 19 | Example | $3.8 \times 10^7$ | 3.0 | 1.2 | A | A | A |
| 20 | Example | $3.8 \times 10^7$ | 4.1 | 1.2 | B | B | B |
| 21 | Comparative Example | $3.8 \times 10^7$ | 6.2 | 1.2 | G | G | G |

(continued)

| Experiment No. | Experimental Example | Electrical resistance of surface of positive electrode active material particles | C amount of positive electrode active material layer | GD ratio of active material by Raman | Adhesion strength | Electrode | Battery performance |
|---|---|---|---|---|---|---|---|
| | | $\Omega$ | % by mass | | | Electron conductivity | Cycle **characteristics** |
| 22 | Example | $3.0 \times 10^7$ | 3.9 | 1.3 | D | C | C |
| 23 | Example | $3.0 \times 10^7$ | 4.7 | 1.3 | D | D | D |
| 24 | Example | $3.0 \times 10^7$ | 5.6 | 1.3 | E | E | E |
| 25 | Comparative Example | $3.0 \times 10^7$ | 6.3 | 1.3 | G | G | G |
| 26 | Comparative Example | $1.7 \times 10^8$ | 4.6 | 0.6 | C | G | G |
| 27 | Example | $5.7 \times 10^7$ | 4.6 | 0.95 | C | C | C |
| 28 | Example | $5.7 \times 10^7$ | 5.3 | 0.95 | D | D | D |
| 29 | Example | $1.2 \times 10^8$ | 4.6 | 0.90 | D | E | E |
| 30 | Example | $3.8 \times 10^7$ | 4.6 | 1.20 | D | D | D |
| 31 | Example | $3.0 \times 10^7$ | 4.6 | 1.3 | D | D | D |
| 32 | Example | $3.0 \times 10^7$ | 4.6 | 1.3 | E | E | E |
| 33 | Example | $3.0 \times 10^7$ | 4.6 | 1.3 | E | E | E |
| 34 | Example | $2.9 \times 10^7$ | 4.7 | 1.4 | D | D | D |
| 35 | Example | $2.9 \times 10^7$ | 4.7 | 1.4 | E | E | E |

In the positive electrode slurries of the experiments Nos. 1 to 9, 18, 21, 25, and 26, any one of the following was not satisfied: $5 \leq x \times y \leq 420$ and $100 \leq x$, where x is the specific surface area of the conductive auxiliary agent and y is the content of the conductive auxiliary agent in the solid content of the positive electrode slurry; or the electron conductivity z of the positive electrode active material was 1.0 or more. The positive electrode active material layers formed of these positive electrode slurries had the rate of change in area of 5% or more (excluding No. 26) in the evaluation of the adhesiveness described above, and had a low electron conductivity of the electrode of less than 2 mS/cm, and was inferior in adhesiveness to the collector and in electron conductivity. The secondary batteries produced using these positive electrode slurries had a discharge capacity retention rate of less than 85%, which resulted in deteriorated cycle characteristics.

In the positive electrode slurries of the experiments Nos. 10 to 17, 19, 20, 22 to 24, and 27 to 35, both of the following were satisfied: $5 \leq x \times y \leq 420$ and $100 \leq x$, where x is the specific surface area of the conductive auxiliary agent and y is the content of the conductive auxiliary agent in the solid content of the positive electrode slurry; and the electron conductivity z of the positive electrode active material was 1.0 or more. The positive electrode active material layers formed of these positive electrode slurries had excellent adhesiveness to the collector and excellent electron conductivity. The secondary batteries produced using these positive electrode slurries also had excellent cycle characteristics. In the positive electrode slurry according to the embodiment of the present invention, it is considered that, in a case where the positive electrode active material in which the electron conductivity is increased in a specific range and the conductive auxiliary agent having a specific surface area of 100 m$^2$/g or more are used, and the relationship between the specific surface area and the content of the conductive auxiliary agent is controlled, a degree of liquid absorption of the dispersion medium is controlled, and thus the slurry is less likely to be powdery and the adhesiveness to the collector is secured. In addition to the adhesiveness, the positive electrode slurry has excellent electron conductivity in a case of being used as a positive electrode active material layer. As a result, it is considered that a secondary battery having excellent cycle characteristics is obtained.

Among these, in a case where the expression A is satisfied, the adhesiveness, the electron conductivity, and the battery performance tend to be further improved.

In a case where the carbon amount of the positive electrode active material layer is reduced, it is preferable in terms of improving the adhesiveness, the electron conductivity, and the battery performance. It is considered that the amount of the electrolytic solution absorbed by the carbonaceous component was reduced.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2023-051784 filed in Japan on March 28, 2023, the contents of which are incorporated herein by reference, as a part of the description of the present specification.

Explanation of References

    10: non-aqueous electrolytic solution secondary battery
    1: negative electrode collector
    2: negative electrode active material layer
    3: separator
    4: positive electrode active material layer
    5: positive electrode collector
    6: operation portion (light bulb)

**Claims**

1. A slurry for forming a positive electrode of a non-aqueous electrolytic solution secondary battery, the slurry comprising:

    a positive electrode active material;
    a conductive auxiliary agent; and
    an electrolyte,
    wherein a specific surface area x (m$^2$/g) of the conductive auxiliary agent and a content y (% by mass) of the conductive auxiliary agent in a solid content of the slurry for forming a positive electrode satisfy $5 \leq x \times y \leq 420$ and $100 \leq x$, and
    an electron conductivity z (mS/cm) of the positive electrode active material is 1.0 or more.

2. The slurry for forming a positive electrode according to claim 1,
    wherein the x, the y, and the z satisfy $z \leq (-0.0175 \times x \times y) + 10$.

3. The slurry for forming a positive electrode according to claim 2,
    wherein an electrical resistance of a surface of the positive electrode active material is $1.0 \times 10^8$ Ω or less.

4. The slurry for forming a positive electrode according to claim 3,
    wherein a carbon amount on a surface of a positive electrode active material layer formed of the slurry for forming a positive electrode is 5.0% by mass or less.

5. The slurry for forming a positive electrode according to claim 4,
    wherein, in Raman spectroscopic analysis of the surface of the positive electrode active material, a ratio (G/D) of a peak intensity of a G band to a peak intensity of a D band is 0.5 to 4.0.

6. A non-aqueous electrolytic solution secondary battery comprising, in the following order:

    a positive electrode;
    a separator; and
    a negative electrode,
    wherein the slurry for forming a positive electrode according to any one of claims 1 to 5 is used as a positive electrode active material layer of the positive electrode.

7. A method for manufacturing a non-aqueous electrolytic solution secondary battery, comprising:
applying the slurry for forming a positive electrode according to any one of claims 1 to 5 onto a positive electrode collector to form a slurry-like positive electrode active material layer.

FIG. 1

## INTERNATIONAL SEARCH REPORT

| International application No. |
|---|
| **PCT/JP2024/012309** |

**A. CLASSIFICATION OF SUBJECT MATTER**

*H01M 4/139*(2010.01)i; *H01M 4/62*(2006.01)i
FI:   H01M4/139; H01M4/62 Z

According to International Patent Classification (IPC) or to both national classification and IPC

**B. FIELDS SEARCHED**

Minimum documentation searched (classification system followed by classification symbols)

H01M4/139; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/035681 A1 (SANYO ELECTRIC CO., LTD.) 01 April 2010 (2010-04-01) | 1-7 |
| A | JP 2004-103546 A (MITSUBISHI CHEMICAL CORPORATION) 02 April 2004 (2004-04-02) | 1-7 |
| A | JP 9-92265 A (DENSO CORPORATION) 04 April 1997 (1997-04-04) | 1-7 |
| A | WO 2011/052533 A1 (DKS CO., LTD.) 05 May 2011 (2011-05-05) | 1-7 |
| A | JP 2020-068118 A (NISSAN MOTOR CO., LTD.) 30 April 2020 (2020-04-30) | 1-7 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/012309**

| Patent document cited in search report | | | Publication date (day/month/year) | Patent family member(s) | | | Publication date (day/month/year) |
|---|---|---|---|---|---|---|---|
| WO | 2010/035681 | A1 | 01 April 2010 | US | 2011/0177391 | A1 | |
| | | | | EP | 2337122 | A1 | |
| | | | | CN | 102160215 | A | |
| JP | 2004-103546 | A | 02 April 2004 | (Family: none) | | | |
| JP | 9-92265 | A | 04 April 1997 | US | 5789114 | A | |
| WO | 2011/052533 | A1 | 05 May 2011 | US | 2012/0270101 | A1 | |
| | | | | EP | 2495795 | A1 | |
| | | | | CN | 102598388 | A | |
| | | | | KR | 10-2012-0080227 | A | |
| JP | 2020-068118 | A | 30 April 2020 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017147222 A
- JP 2016201308 A
- JP 2005108835 A
- JP 2012185938 A
- WO 2018135395 A
- JP 2023051784 A